# EUROPEAN PATENT APPLICATION

(11) **EP 3 909 936 A1**
(43) Date of publication of application: **17.11.2021**
(21) Application number: 20174885.2
(22) Date of filing: 15.05.2020
(51) Int. Cl.: C04B 28/04, C04B 28/16, C04B 40/06

(54) **MULTI-COMPONENT INORGANIC CAPSULE ANCHORING SYSTEM BASED ON PORTLAND CEMENT CLINKER**

(71) Applicant: Hilti Aktiengesellschaft, 9494 Schaan (LI)
(72) Inventor: Schönlein, Markus, 82205 Gilching (DE); Pfeil, Armin, 86899 Landsberg am Lech (DE); Middendorf, Bernhard, 34379 Calden (DE); Schade, Tim, 34125 Kassel (DE)
(74) Representative: Hilti Aktiengesellschaft Corporate Intellectual Property

(57) **Abstract**

The present invention describes to a multi-component inorganic capsule anchoring system for a chemical fastening of anchors, bolts, screw anchors, screw bolts and post-installed reinforcing bars in mineral substrates, comprising a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer.

## Description

### FIELD OF THE INVENTION

The present invention pertains to a multi-component inorganic capsule anchoring system for a chemical fastening of anchors, bolts, screw anchors, screw bolts and post-installed reinforcing bars in mineral substrates, comprising a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer. Moreover, the present invention pertains to a method for a chemical fastening of anchoring means, preferably of metal anchors, bolts, screw anchors, screw bolts and post-installed reinforcing bars, in mineral substrates, such as structures made of brickwork, concrete, pervious concrete or natural stone using said multi-component inorganic capsule anchoring system.

### BACKGROUND OF THE INVENTION

Many mortar systems exist which provide a good chemical fastening of anchors, bolts, screw anchors, screw bolts and post-installed reinforcing bars in mineral substrates or surfaces. Predominantly mineral systems based on aluminous cement or the like have been developed.

When it comes to chemically fastening of anchors, bolts, screw anchors, screw bolts and post-installed reinforcing bars in mineral substrates, most of the known systems lack in sufficient fluidity for most practical applications of the resultant anchoring compositions. Moreover, liquid systems or systems in slurry form exist that have to be mixed prior to the introduction into the borehole making application difficult, in particular with respect to overhead or under water applications, as liquid mortar can drop out of the borehole or can liquefy due to the surrounding water or moist. Often such prior art compositions also evidence a tendency to crack in a relatively short time or do not exhibit the required mechanical performance, in particular under certain conditions such as under the influence of elevated temperatures, in different conditioned boreholes as well as over a long period of time. Moreover, known systems tend to exhibit a large extend of shrinkage when applied in a borehole which results in an insufficient anchoring of the anchors bolts, screw anchors, screw bolts and post-installed reinforcing bars.

Therefore, there is a need for an inorganic capsule anchoring system, preferably a multi-component inorganic capsule anchoring system, which is superior over the prior art systems. In particular, it is of interest to provide a system that can be used for a chemical fastening of anchors bolts, screw anchors, screw bolts and post-installed reinforcing bars in mineral substrates without adversely affecting the handling characteristics, in particular with respect to overhead applications, under water applications, and the mechanical performance of the chemical anchoring system. Especially, there is a need for a system that provides increased load values when compared to the known systems. In addition, there is a need to improve load values by the addition of fillers or particles materials, such as an inorganic-based material, to lower the consumption of more expensive binder material or to improve some properties of the mixed material.

In view of the above, it is an object of the present invention to provide an inorganic capsule anchoring system, preferably a multi-component inorganic capsule anchoring system, in particular a two-component inorganic capsule anchoring system, which has an excellent mechanical performance, also over a long period of time, and at the same time has increased load values when compared to the known systems and which has advantages, in particular with regard to its direct application within the borehole, to under water applications and to overhead applications.

Moreover, it is an object of the present invention to provide a method for a chemical fastening of anchoring means, preferably of metal anchors bolts, screw anchors, screw bolts and post-installed reinforcing bars, in mineral substrates, such as structures made of brickwork, concrete, pervious concrete or natural stone, using this inorganic capsule anchoring system.

These and other objectives as they will become apparent from the ensuring description of the invention are solved by the present invention as described in the independent claims. The dependent claims pertain to preferred embodiments.

### SUMMARY OF THE INVENTION

In one aspect, the present invention pertains to a multi-component inorganic capsule anchoring system comprising a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer. This provided system in capsule form is used for chemical fastening of anchoring means in mineral substrates.

In another aspect, the present invention pertains to a method for a chemical fastening of anchors, metal anchors, bolts, screw anchors, screw bolts and post-installed reinforcing bars in mineral substrates, which is characterized in that a multi-component inorganic capsule anchoring system is used for fastening, which comprises a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer. The mineral substrates are substrates such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "binder" or "binder component" in the context of the present invention refers to the cementitious constituent of the multi-component inorganic capsule anchoring systems. In particular, this is also referred to as the A component.

The term "initiator" or "initiator component" in the context of the present invention refers to the aqueous hydrating component, preferably to water, which triggers stiffening, solidification and hardening as a subsequent reaction. In particular, this is also referred to as a B component.

It has been surprisingly found out by the inventors, that the inorganic capsule anchoring system according to the present invention is an easy to handle ready-for-use system for a chemical fastening of anchors, metal anchors, bolts, screw anchors, screw bolts and post-installed reinforcing bars in mineral substrates, comprising a curable powdery Portland cement clinker-based component A and an initiator component B, especially when applied over a long period of time, and overhead. Further, this inorganic capsule anchoring system is particular suitable for fire-resistant and high-temperature applications as well as for under water applications, e.g. for the installation of oilrigs.

Moreover, it has been found that the multi-component inorganic capsule anchoring system of the present invention, in particular a two-component inorganic capsule anchoring system, allows for an easy application and fastening directly within the borehole without having to premix the components before introducing them into the borehole. When applied under water for example, the components of the inserted capsule are mixed by introducing the anchor rod into the borehole, the water surrounding the capsule is driven out and allows the anchor rod to be fastened.

Therefore, the present invention pertains to a multi-component inorganic capsule anchoring system comprising a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer.

Component A as used in the present invention is based on Portland cement clinker. The Portland cement clinker preferably comprises from 58 to 70 % calcium oxide (CaO), from 18 to 26 % silicon dioxide (SiO₂), from 1 to 10 % aluminum oxide (Al₂O₃) and from 1 to 10 % ferric oxide (Fe₂O₃). Further characteristic contents of the Portland cement clinker are titanium dioxide (TiO₂), sodium oxide (Na₂O), potassium oxide (K₂O), chloride, sulfide, phosphorous pentoxide (P₂O₅), sulfur trioxide (SO₃) and magnesium oxide (MgO), which preferably represent less than 5 % of the clinker.

The clinker phases of the Portland cement clinker comprise from 40 to 80 % tricalcium silicate (Alite) C₃S, from 5 to 30 % dicalcium silicate (Belite) C₂S, from 1 to 20 % tricalcium aluminate C₃A, from 1 to 20 % calcium aluminate ferrite C₄AF and other phases, which are present in a minimal amount.

Component A as used in the present invention comprises at least about 10 wt.-%, preferably at least about 15 wt.-%, more preferably at least about 20 wt.-%, most preferably at least about 25 wt.-%, from about 10 wt.-% to about 90 wt.-%, preferably from about 15 wt.-% to about 85 wt.-%, more preferably from about 20 wt.-% to about 70 wt.-%, most preferably from about 25 wt.-% to about 60 wt.-% of Portland cement clinker, based on the total weight of component A.

Component A as used in the present invention further comprises a sulfate agent. The sulfate agent is preferably selected from the group consisting of calcium sulfate, sodium sulfate, lithium sulfate, magnesium sulfate and potassium sulfate. Preferably, component A comprises a calcium sulfate selected from calcium sulfate dihydrate, calcium sulfate anhydrite, calcium sulfate hemihydrate and mixtures thereof. In a particularly preferred embodiment, the sulfate agent is a mixture of anhydrite and hemihydrate, preferably with a wt.-% ratio of 1.5:1. The multi-component inorganic capsule anchoring system of the present invention preferably comprises the sulfate agent in a range of from 0.5 wt.-% to 6 wt.-%, more preferably from 1.5 wt.-% to 5 wt.-%, most preferably in a range of from 2 wt.-% to 4 wt.-%, based on the total weight of component A.

Further, component A as used in the present invention may comprise silica dust. The silica dust of the multi-component inorganic capsule anchoring system is present in a range of from 1 wt.-% to 10 wt.-%, preferably from 2 wt.-% to 8 wt.-%, most preferably in a range of from 4 wt.-% to 6 wt.-%, based on the total weight of component A. Preferably, the silica dust has an average particle size of 0.4 microns and a surface area of 180,000 to 220,000 cm²/g or 18-22 m²/g, respectively.

Alternatively, the silica dust can also be replaced by Puzzolane materials or by materials with puzzolanic properties or by other fine reactive or inert fillers. These include corundum, calcite, dolomite, brick flour, rice peel ash, phonolite, calcined clay, fly ash, ground-granulated blast furnace slag, kaolin and metakaolin.

In a preferred embodiment of the cementitious multi-component mortar system, the silica dust is present in a range of 5 wt.-% to 6 wt.-%, based on the total weight of the binder.

Component A may additionally comprise a mineral filler. The mineral filler comprised in component A according to the present invention is selected from the group consisting of limestone fillers, sand, quartz, corundum, dolomite, crushed stones, gravels, pebbles, clays, slags and mixtures thereof, preferred are limestone fillers, coarse quartz, quartz powder, preferably quartz powder having an averaged grain size (d50%) of about 16 µm, quartz sand, quartz flour, clay, fly ash, fumed silica, carbonate compounds, such as various calcium carbonates, aluminas, pigments, titanium oxides, light fillers, corundum, and their mixtures. Suitable mineral fillers are commercially available products. Exemplarily mentioned is quartz powder Millisil W12 or W6 (Quarzwerke GmbH, Germany), quartz sand F32 (Quarzwerke GmbH, Germany), or Sewper Aggregates, such as SewperCoat® (Kerneos S.A, France). Component A comprises at least about 5 wt.-%, preferably at least about 10 wt.-%, more preferably at least about 20 wt.-%, still more preferably at least about 25 wt.-%, most preferably at least about 30 wt.-%, from about 5 wt.-% to about 95 wt.-%, preferably from about 10 wt.-% to about 70 wt.-%, more preferably from about 20 wt.-% to about 60 wt.-%, still more preferably from about 25 wt.-% to about 50 wt.-%, most preferably from about 30 wt.-% to about 40 wt.-% of mineral filler, based on the total weight of component A.

The mineral filler that can be used according to the present invention, is comprised in the powdery Portland cement clinker-based component A of the multi-component inorganic capsule anchoring system. The addition of the mineral filler lowers the consumption of more expensive binder material and improves some properties of the mixed material, results in an increase of load values and eases overhead and under water applications when the multi-component inorganic capsule anchoring system is in form of a two-component inorganic capsule anchoring system.

In an advantageous embodiment, component A as used in the present invention may further comprise the following characteristics, taken alone or in combination.

Component A may also additionally comprise a plasticizer in powder form. The plasticizer comprised in component A may be selected from the group consisting of low molecular weight (LMW) polyacrylic acid polymers, polycondensates, like e.g. sulfonated melamine formaldehydes, lingosulfonates, caseins, superplasticizers from the family of polyphosphonate polyox and polycarbonate polyox, and superplasticizers from the polycarboxylate ether family, and mixtures thereof, for example Melflux 4930 F or Melflux 5581 F (BASF Construction Solutions GmbH), Peramin SMF or Peramin CONPAC (Imerys Aluminates). Suitable plasticizers are commercially available products. Component A may comprise at least about 0.2 wt.-%, preferably at least about 0.3 wt.-%, more preferably at least about 0.4 wt.-%, most preferably at least about 0.5 wt.-%, from about 0.2 wt.-% to about 10 wt.-%, preferably from about 0.3 wt.-% to about 5 wt.-%, more preferably from about 0.4 wt.-% to about 4 wt.-%, most preferably from about 0.5 wt.-% to about 2 wt.-% of said plasticizer, based on the total weight of component A.

Furthermore, component A may comprise at least one accelerator or accelerator mixtures in powder form. Common accelerators for Portland cement can be used. The accelerator consists of at least one alkaline and/or alkaline earth metal salt selected from the group consisting of hydroxides, chlorides, sulfates, phosphates, monohydrogen phosphates, dihydrogen phosphates, nitrates, carbonates and mixtures thereof, preferably at least one accelerator is an alkali metal and/or alkaline earth metal salt, a calcium metal salt, such as calcium hydroxide, calcium sulfate, calcium carbonate, calcium chloride, calcium nitrate, calcium formate or calcium phosphate, a sodium metal salt, such as sodium hydroxide, sodium sulfate, sodium carbonate, sodium chloride, sodium nitrate, sodium formiat or sodium phosphate, or from C-S-H seeds like Master X-Seed (BASF Construction Solutions GmbH).

Furthermore, component A may contain other cements, such as calciumaluminate-based cement. Furthermore, component A may contain fibers, such as mineral fibers, man-made fibers, natural fibers, synthetic fibers, fibers of natural or synthetic polymers, fibers of inorganic substances, in particular carbon fibers or glass fibers.

The presence of mineral filler, accelerator, plasticizer in powder form does not change the overall inorganic nature of the cementitious-like component A.

Component B as used in the present invention comprises water and optionally a plasticizer. The optionally plasticizer comprised in component B of the present invention is selected from the group consisting of low molecular weight (LMW) polyacrylic acid polymers, polycondensates, like e.g. sulfonated melamine formaldehydes, lingosulfonates, caseins, superplasticizers from the family of polyphosphonate polyox and polycarbonate polyox, and superplasticizers from the polycarboxylate ether family, and mixtures thereof, for example Ethacryl™ G (Coatex, Arkema Group, France), Acumer™ 1051 (Rohm and Haas, U.K.), Sika® ViscoCrete®-2520 (Sika, Germany) or Sika® ViscoCrete®-20 HE (Sika, Germany). Suitable plasticizers are commercially available products. Component B comprises at least about 2 wt.-%, preferably at least about 5 wt.-%, more preferably at least about 10 wt.-%, most preferably at least about 15 wt.-%, from about 2 wt.-% to about 40 wt.-%, preferably from about 5 wt.-% to about 35 wt.-%, more preferably from about 10 wt.-% to about 30 wt.-%, most preferably from about 15 wt.-% to about 25 wt.-% of said plasticizer, based on the total weight of component B.

Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Acrysol ASE-60 (The Dow Chemical Company). Component B may comprise at least about 0.01 wt.-%, preferably at least about 0.05 wt.-%, more preferably at least about 0.1 wt.-%, most preferably at least about 0.2 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.2 wt.-% to about 1 wt.-% of said thickening agent, based on the total weight of component B.

Component B may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures.

Furthermore, component B may comprise at least one accelerator or accelerator mixtures in aqueous form. Common accelerators for Portland cement can be used. The accelerator consists of at least one alkaline and/or alkaline earth metal salt selected from the group consisting of hydroxides, chlorides, sulfates, phosphates, monohydrogen phosphates, dihydrogen phosphates, nitrates, carbonates and mixtures thereof, preferably at least one accelerator is an alkali metal and/or alkaline earth metal salt, a calcium metal salt, such as calcium hydroxide, calcium sulfate, calcium carbonate, calcium chloride, calcium nitrate, calcium formiat or calcium phosphate, a sodium metal salt, such as sodium hydroxide, sodium sulfate, sodium carbonate, sodium chloride, sodium nitrate, sodium formate or sodium phosphate, or Master X-Seed 100 (BASF).

Furthermore, at least one filler or filler mixtures may be present in the initiator component. These are preferably selected from the group consisting of quartz, sand, quartz flour, pigments, titanium oxides, light fillers, limestone fillers, corundum, dolomite, alkali-resistant glass, crushed stones, pebbles, pebbles and mixtures thereof.

The presence of a plasticizer, thickening agent, filler, antibacterial or biocidal agent and/or accelerator in liquid form does not change the overall inorganic nature of the component B.

Component B is present in aqueous phase, preferably in form of a liquid. In an alternative embodiment, component B may also be present in form of a slurry or paste.

The weight ratio between component A and component B (A/B) is preferentially comprised between 8/1 and 1/3, preferably is 4.5/1. Preferably, the composition of the mixture comprises 82 wt.-% of component A and 18 wt.-% of component B. In an alternative embodiment, the composition of the mixture comprises 25 wt.-% of component A and 75 wt.-% of component B.

It is preferred that the multi-component inorganic capsule anchoring system has an initial set-time of at least 1 min, preferably of at least 2 min, more preferably of at least 3 min, most preferably of at least 5 min, in particular in the range of from about 5 to 25 min, preferably in the range of about 5 to 20 min, after mixing of the two components A and B.

In the multi-component inorganic capsule anchoring system, especially the two-component inorganic capsule anchoring system, the volume ratio of cementitious component A to component B is 1:1 to 8:1, preferably is 2:1. In an alternative embodiment, the volume ratio of cementitious component A to component B is 1:3 to 1:2.

The multi-component inorganic anchoring system is preferably a ready-for-use system, whereby component A and B are in a multi-chamber device, such as a multi-chamber cartridge, a multi-chamber cylinder and/or a multi-chamber capsule, preferably a two-component capsule. In particular, the two-component inorganic capsule anchoring system includes two foil bags for separating curable component A and initiator component B. Preferably, these foil bags are made of metal or plastic, most preferably aluminum or polyethylene. In an alternative embodiment, the two-component inorganic capsule is made of glass, metal or paper. The two-component inorganic capsule can also be referred to as capsule-in-capsule, foil-in-foil or glass-in-glass. The contents of the capsule are mixed together by inserting the inorganic anchoring system into the borehole, introducing the anchoring device thereby destroying the capsule and mixing component A and B directly within the borehole ready for setting and chemically fastening the anchoring means.

In particular, the multi-component inorganic capsule anchoring system is to be considered as a chemical anchor for fastening anchoring means, such as metal anchors, bolts, screw anchors, screw bolts and post-installed reinforcing bars or the like into mineral substrates, such as structures made of brickwork, concrete, pervious concrete or natural stone. It is preferred that the multi-component inorganic capsule anchoring system is used for fastening anchor rods in boreholes.

Moreover, the multi-component inorganic capsule anchoring system may be used for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements. However, in particular it is used for fastening of anchoring means, preferably metal anchors and post-installed reinforcing bars, such as anchor rods, in particular threaded rods, bolts, steel reinforcement bars or the like into recesses, such as boreholes, in mineral substrates, such as structures made of brickwork, concrete, pervious concrete or natural stone, whereby the components of the multi-component inorganic capsule anchoring system are mixed, for example by destroying the capsule or a plastic/film bag.

The inventive multi-component inorganic capsule anchoring system preferably is contained separately in a two-chamber capsule so as to inhibit reaction and can be caused to react under use conditions. Moreover, the component A and the component B are produced separately from each other, so that the one component usually contains the curable powdery cement, while the other component contains the initiator component B including water and optionally a plasticizer. The fillers, as well as the remaining components, may be contained in the one or also the other component.

The two-chamber and multi-chamber systems, in which the inventive, multi-component inorganic capsule anchoring system is present, include especially cartridges of glass, plastic, plastic sheets or ceramic, in the interior of which the curable component is kept separate from the initiator component agent by walls, which can be destroyed. Such cartridge or capsule systems are placed in the boreholes. To initiate the curing reaction, the cartridges or capsules, including the partitions contained therein, are destroyed, for example, by driving anchoring means, such as a tie bar, into them.

The following example illustrates the invention without thereby limiting it.

### EXAMPLES

There are only one-component inorganic capsule systems known, which have to be immersed in water to be ready for using their content for chemical fastening. These are not suitable for overhead and under water applications, they are not easy to handle and to portion. These one-component systems are for example Denka Quick capsules (Denka Co. Ltd., Japan) or Ambex systems from Ambex Concrete Repair Solutions, Canada. Other known two-component systems have to be pre-mixed outside of the borehole and require several additional tools and working steps, e.g. Cemeforce (Sumitomo Osaka Cement Co. Ltd., Japan).

### 1. Composition of the Portland cement clinker

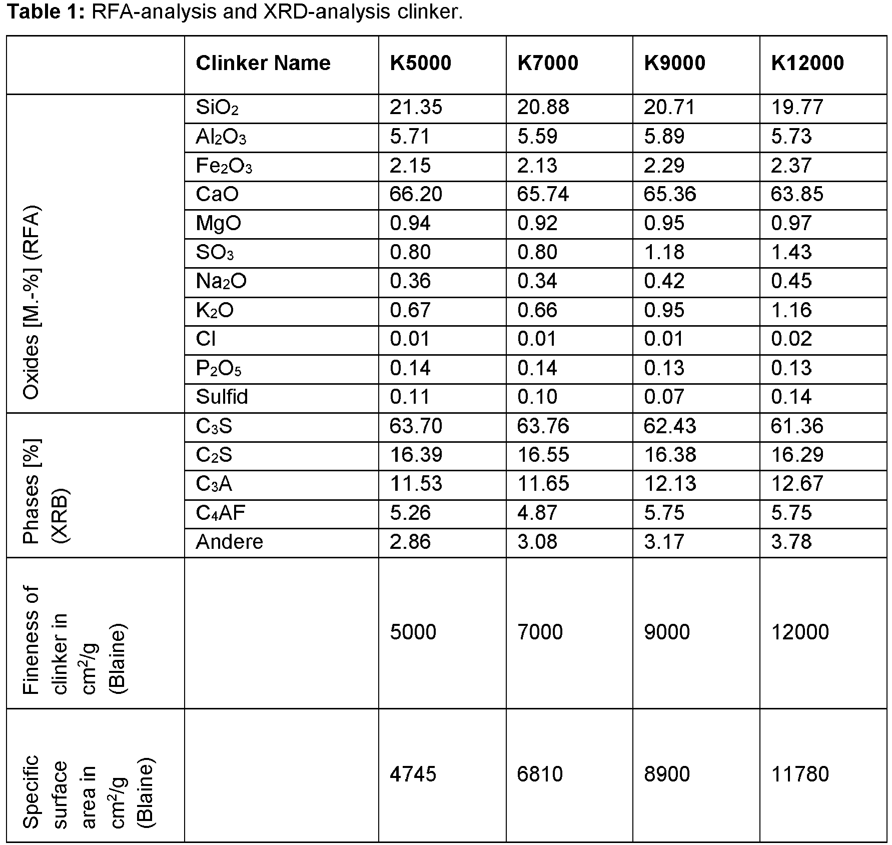

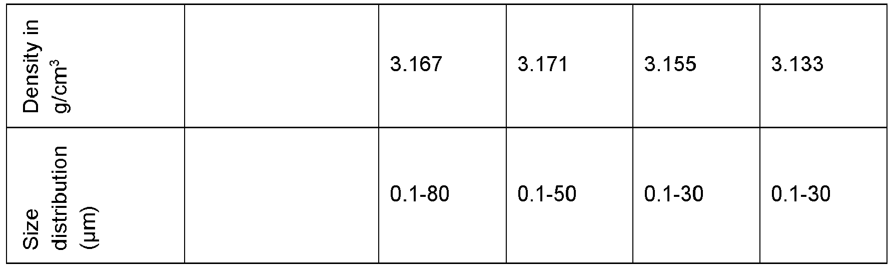

### 2. Preparation of component A and component B

The powdery cementitious component A as well as the liquid initiator component B of the examples are initially produced by mixing the constituents specified in Tables 2 and 3, respectively, with those specified in Table 4. The proportions that are given are expressed in wt.-%.

**Table 2: Composition of component A based on Portland cement clinker [wt.-%].**

| | Binder | Binder | Binder | Binder | Setting agent | Binder | Filler | Filler |
|---|---|---|---|---|---|---|---|---|
| | **K5000** | **K7000** | **K9000** | **K12000** | **Calcium sulfate¹⁾** | **Silica-dust²⁾** | **Sand³⁾** | **Quartz-powder⁴⁾** |
| **A0** | 30.8 | | | | 1.1 | 6.5 | 51.1 | 10.5 |
| **A1** | | 29.4 | | | 1.4 | 6.2 | 52.2 | 10.8 |
| **A2** | | | 26.6 | | 4 | 5.6 | 52.8 | 10.9 |
| **A3** | | | 28.0 | | 1.7 | 6 | 53.3 | 11 |
| **A4** | | | | 24.8 | 5.4 | 5.3 | 53.5 | 11.0 |
| **A5** | | | | 26.3 | 2.9 | 5.6 | 54.1 | 11.1 |
| **A6** | | | | 27.9 | 2 | 5.8 | 54.1 | 11.2 |

| | | | | | | | | |
|---|---|---|---|---|---|---|---|---|
| ¹⁾ Calcium sulfate: Mixture of calcium sulfate hemihydrate and calcium sulfate anhydrite in a wt.-% ratio of 1:1.5; finess in cm²/g (Blaine) 9000; size distribution (µm) 0.1-30. ²⁾ Silica dust: finess in cm²/g (Blaine) 180.000-220.000; size distribution (µm) 0.1-10. ³⁾ Sand: size distribution (µm) 125-1000. ⁴⁾ Quartz powder: size distribution (µm) 0.1-100. | | | | | | | | |

**Table 3: Composition of component B (wt.-%).**

| | Initiator | plasticizer |
|---|---|---|
| | **Waterr** | **Polycarboxylate ether** |
| **B0** | 91.2 | 8.8 |
| **B1** | 95.1 | 4.9 |

**Table 4: Mixing ratio of component A to component B.**

| **Component A** | **Component B** | **A/B-Ratio** | **Water/Binder Ratio** |
|---|---|---|---|
| A0 | B0 | 0.158 | 0.4 |
| A1 | B0 | 0.17 | 0.45 |
| A2 | B0 | 0.184 | 0.5 |
| A3 | B0 | 0.184 | 0.5 |
| A4 | B0 | 0.2 | 0.55 |
| A5 | B0 | 0.2 | 0.55 |
| A6 | B0 | 0.2 | 0.55 |
| A5 | B1 | 0.2 | 0.55 |
| A6 | B1 | 0.2 | 0.55 |

### 3. Determination of mechanical performance

After being produced separately, the powdery binder component A and initiator component B are mixed in a stainless steel sleeve borehole having a diameter of 12 mm, an anchoring depth of 32 mm and ground undercuts of 0.33 mm with an M8 threaded anchor rod with a length of 100 mm. The load values of the cured mortar compositions are determined at certain times within 24 hours by using a device for testing materials "Zwick Roell Z050" (Zwick GmbH & Co. KG, Ulm, Germany). The stainless steel sleeve is fastened on a plate while the threaded anchor rod is fixed to the force measuring device with a nut. With a preload of 500 N and a testing rate of 3 mm/min the failure load is determined by centrally pulling out the threaded anchor rod. Each example consists of a mean value of five pull-outs. Ultimate failure loads are calculated as inner strengths and given in N/mm² in Table 5.

**Table 5: Inner strengths in N/mm².**

| **Example** | **Components** | **Temperatur** | **Setting time in min** | **Inner strengths in N/mm²** |
|---|---|---|---|---|
| **1** | A0 + B0 | 20°C | 5 | 5.4 |
| **2** | A1 + B0 | 20°C | 3 | 8.5 |
| **3** | A2 + B0 | 20°C | 3 | 13.8 |
| **4** | A3 + B0 | 20°C | 1 | 14.0 |
| **5** | A4 + B0 | 20°C | 2 | 19.2 |
| **6** | A5 + B0 | 20°C | 1 | 20.5 |
| **7** | A6 + B0 | 20°C | 1 | 20.7 |
| **8** | A0 + B0 | 0°C | 6 | 0.3 |
| **9** | A6 + B0 | 0°C | 1 | 4.9 |
| **10** | A0+B0 | 5°C | 6 | 0.9 |
| **11** | A6 + B0 | 5°C | 1 | 4.5 |
| **12** | A0 + B0 | 10°C | 5 | 3.8 |
| **13** | A6 + B0 | 10°C | 1 | 11.9 |
| **14** | A0 + B1 | 20°C | 7 | 2.8 |
| **15** | A6 + B1 | 20°C | 2 | 19.3 |

As it can be seen from Table 5, all measurable systems show considerable inner strengths after 24 hours of curing as well as increased load values and hence, improved mechanical strength means. As it has been shown additionally above, that the use of finely ground binders in particular with a fineness in a range of 3,000 - 15,000 cm²/g, preferably a particle fineness of 5,000 - 12,000 cm²/g provides for an increase in load values and hence mechanical strength.

In General, the multi-component inorganic capsule anchoring system has an excellent mechanical performance, also over a long period of time, and at the same time high load values, which has advantages, in particular with regard to its direct application within the borehole, in fire conditions and under elevated temperature as well as under water and overhead.

## Claims

1. A multi-component inorganic capsule anchoring system for a chemical fastening of anchors, bolts, screw anchors, screw bolts and post-installed reinforcing bars in mineral substrates, comprising a curable powdery Portland cement clinker-based component A and an initiator component B in aqueous-phase for initiating the curing process, wherein the powdery Portland cement clinker-based component A comprises further a sulfate agent, and wherein component B comprises water and optionally a plasticizer.

2. The multi-component inorganic capsule anchoring system according to claim 1, wherein component A further comprises silica dust.

3. The multi-component inorganic capsule anchoring system according to claim 1 or 2, wherein component A further comprises a mineral filler.

4. The multi-component inorganic capsule anchoring system according to anyone of the preceding claims, wherein component A comprises from about 20 wt.-% to about 100 wt.-%, of Portland cement clinker, based on the total weight of component A.

5. The multi-component inorganic capsule anchoring system according to anyone of the preceding claims, wherein the sulfate agent is present in a range of from 0.5 wt.-% to 6 wt.-%, based on the total weight of component A.

6. The multi-component inorganic capsule anchoring system according to anyone of the preceding claims, wherein the sulfate agent is selected from the group consisting of calcium sulfate, sodium sulfate, lithium sulfate, magnesium sulfate and potassium sulfate.

7. The multi-component inorganic capsule anchoring system according to anyone of the preceding claims, wherein the sulfate agent is calcium sulfate dihydrate, calcium sulfate anhydrite, calcium sulfate hemihydrate or a mixture thereof.

8. The multi-component inorganic capsule anchoring system according to anyone of the preceding claims, wherein the sulfate agent is a mixture of anhydrite and hemihydrate, preferably with a wt.-% ratio of 1.5:1.

9. The multi-component inorganic capsule anchoring system according to anyone of the preceding claims, **characterized in that** the multi-component inorganic capsule anchoring system is a two-component inorganic capsule anchoring system.

10. The multi-component inorganic capsule anchoring system according to claim 9, wherein the two-component inorganic capsule anchoring system is in the form of a film bag or in form of a glass capsule.

11. A use of the multi-component inorganic capsule anchoring system as defined in anyone of claims 1 to 10, for chemical fastening of anchoring means in mineral substrates.

12. Method for a chemical fastening of anchors and post-installed reinforcing bars in mineral substrates, **characterized in that** a multi-component inorganic capsule anchoring system is used for fastening as defined in anyone of claims 1 to 11.

13. Method according to claim 12, wherein the multi-component inorganic capsule anchoring system used for fastening is a two-component inorganic capsule anchoring system.

14. Method according to claim 13, wherein the two-component inorganic capsule anchoring system is in the form of a film bag or in form of a glass capsule.
